# FASCICULE DE BREVET EUROPEEN

(11) **EP 1 278 444 B1**
(45) Date de publication et mention de la délivrance du brevet: **14.07.2004**
(21) Numéro de dépôt: 01919559.3
(22) Date de dépôt: 26.03.2001
(51) Int. Cl.: A47J 31/44

(54) **MACHINE A INFUSION**
BRÜHGETRÄNKMASCHINE
INFUSION MACHINE

(30) Priorité: 27.03.2000 FR 0003868
(43) Date de publication de la demande: 29.01.2003
(73) Titulaire: SEB S.A., 69132 Ecully (FR); Rolland, Jacky, 14230 Saint Martin de Fontenay (FR)
(72) Inventeur: ROLLAND, Jacky, F-14230 Saint Martin de Fontenay (FR)
(74) Mandataire: Busquets, Jean-Pierre
(86) Numéro de dépôt international: PCT/FR2001/000901
(87) Numéro de publication internationale: WO 2001/072190

(56) Documents cités:
- EP-A- 0 585 607
- DE-A- 3 903 003
- DE-U- 7 915 161
- DE-U- 9 109 023

## Description

La présente invention se rapporte aux machines à infusion selon le préambule de la revendication 1, comportant un socle recevant un bac collecteur formé d'un fond et d'une paroi latérale et équipé d'un couvercle formant un support pour un récipient d'infusion, ainsi qu'un montant solidaire du socle et contenant un dispositif de confection d'infusion ayant une tête de sortie d'infusion surplombant à distance (d) ledit support.

L'invention concerne plus précisément les machines à infusion de ce genre dans lesquelles le support est monté mobile en hauteur par rapport audit bac par un moyen de réglage pour faire varier la distance (d), lequel moyen de réglage comprend des organes d'emboîtement mutuel ajustables en hauteur par coulissement et répartis sur au moins deux régions opposées de la paroi latérale du bac et de la périphérie du support.

Par le document DE- 91 09 023 U, on connaît déjà un support réglable constitué par une simple rehausse qui, en fonction de la taille du récipient d'infusion, peut être soit montée sur le bac, soit non montée sur celui-ci. Cette rehausse constitue une pièce indépendante qui n'est utilisée que pour certaines tailles de récipient, conduisant à un manque de commodité.

D'après le document DE- 79 15 161 U, on connaît également une machine à infusion, sans bac collecteur, ayant un simple support de récipient d'infusion qui est ajustable en hauteur par engagement de son extrémité dans des glissières pratiquées à différents niveaux dans le corps de la machine à infusion.

Un support réglage du type mentionné ci-dessus est décrit dans le document EP-A-0 585 607, qui est considéré comme l'état de la technique le plus proche. Le moyen de réglage exposé dans ce document nécessite cependant la combinaison d'un entraînement à vis et d'un dispositif de blocage à plusieurs positions. Une telle réalisation s'avère délicate à fabriquer et occasionne une élévation du coût de fabrication. En outre, ce moyen de réglage travaille dans l'espace interne du bac récoltant les résidus d'infusion et est donc soumis aux salissures qui peuvent gêner son fonctionnement.

L'invention a notamment pour but de réaliser un moyen de réglage du support sur le bac qui reste bon marché et qui en même temps soit d'une extrême facilité de fonctionnement.

Selon l'invention, une machine à infusion du type décrit précédemment, est caractérisée en ce que les organes d'emboîtement mutuel comprennent, d'une part, un jeu de glissières opposées, étagées sur plusieurs niveaux dans des plans parallèles et implantées sur la paroi interne d'une jupe portée par la périphérie du support, et d'autre part, au moins deux nervures implantées sur la face externe de la paroi latérale du bac et destinées à venir en prise respectivement avec deux glissières opposées.

Ainsi, cette réalisation permet à l'utilisateur de régler le support par un simple mouvement horizontal à la manière d'un tiroir, et en toute propreté puisque les glissières et nervures associées d'emboîtement mutuel sont agencées hors de l'espace interne du bac récoltant les résidus d'infusion.

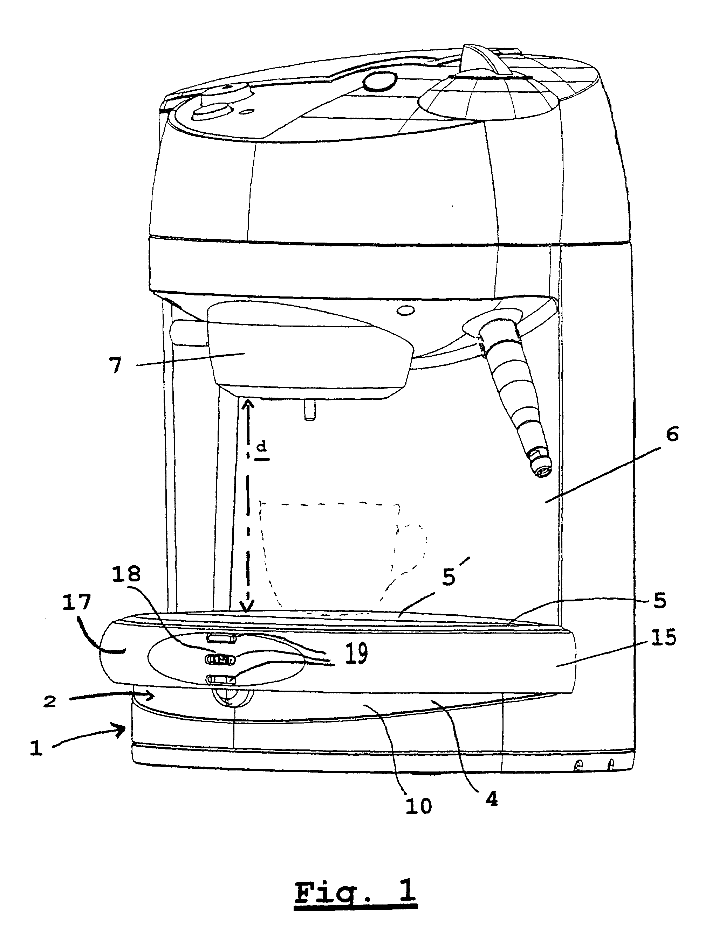

Les caractéristiques et avantages de l'invention ressortiront d'ailleurs de la description qui va suivre, prise à titre d'exemple non limitatif, en référence aux dessins annexés dans lesquels : la figure 1 est une vue partielle en perspective d'une machine à infusion illustrant un bac collecteur équipé d'un couvercle formant support selon l'invention.
La figure 2 représente à plus grande échelle et en perspective frontale le bac équipé de son couvercle ;
La figure 3 illustre en perspective arrière une première phase d'emboîtement du couvercle sur le bac ;
La figure 4 illustre en perspective arrière le couvercle positionné sur le bac à un niveau choisi.

La machine à infusion représentée à la figure 1 comporte un socle 1 recevant un bac collecteur 2 formé d'un fond 3 et d'une paroi latérale 4 constituant le pourtour et équipé d'un couvercle 5 dont la périphérie coiffe la paroi latérale 4 et qui forme un support pour un récipient d'infusion qui peut être, par exemple, une petite ou grande tasse ou bien un pot verseur. Ce socle est solidaire d'un montant 6 en forme de potence contenant un dispositif de confection d'infusion (non représenté) et ayant une tête 7 de sortie d'infusion surplombant à distance d le support 5.

La machine à infusion peut être du type espresso ou goutte à goutte et son socle peut accepter de façon esthétique différentes formes de bac. Dans l'exemple illustré, le bac 2 est monté amovible sur le socle 1 et présente une forme hémicylindrique dont la paroi latérale 4 est formée d'un tronçon arrière 8 sensiblement rectiligne épousant la forme de la face frontale 9 du montant 6 et d'un tronçon frontal 10 en arc de cercle. Le support 5 présente une face supérieure 5' ayant la forme d'un demi-cercle.

De manière connue en soi, le support 5 est monté mobile en hauteur par rapport au bac 2 par un moyen de réglage, désigné dans son ensemble par la référence 11, pour faire varier la distance d de manière à permettre de recevoir correctement l'infusion soit dans une tasse soit dans un pot verseur ou tout autre récipient de hauteur quelconque inférieure à d posé sur la face supérieure 5' du support 5.

Selon l'invention, le moyen de réglage 11 comprend des organes 12 - 13 d'emboîtement mutuel ajustables en hauteur par coulissement et répartis sur au-moins deux régions opposées de la paroi latérale 4 du bac 2 et de la périphérie du support 5. Les organes 12 - 13 d'emboîtement mutuel comprennent, d'une part, un jeu de glissières 13 opposées et étagées dans des plans parallèles, et d'autre part, au-moins deux nervures 12 destinées à venir en prise respectivement avec deux glissières opposées situées dans un même plan.

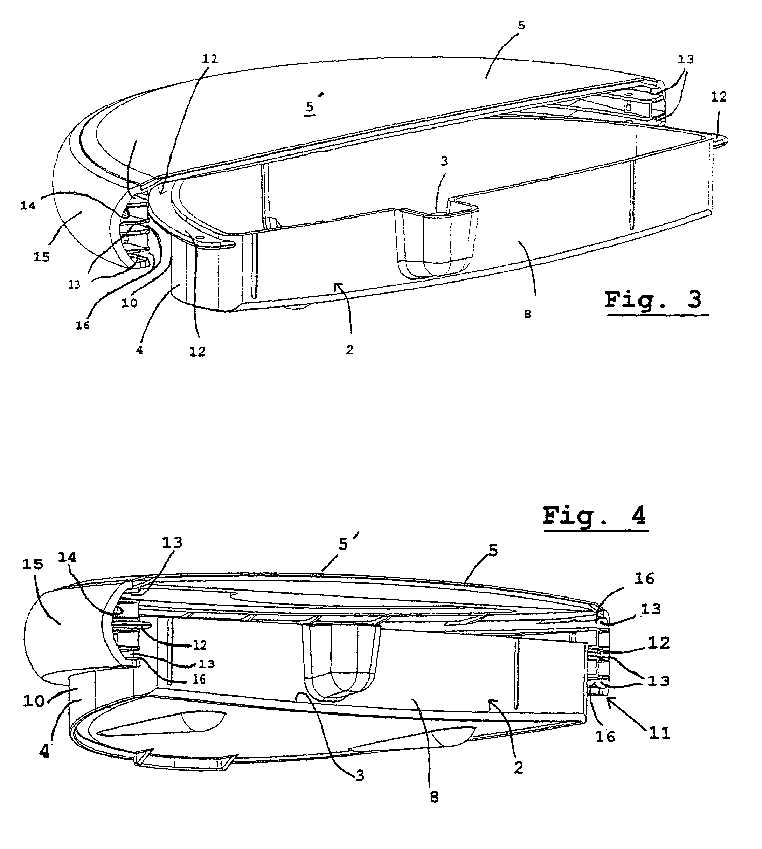

Selon une autre caractéristique de l'invention et comme illustré sur les dessins, le jeu de glissières 13 est implanté sur la paroi interne 14 d'une jupe 15 portée par la périphérie du support 5, et les nervures 12 sont implantées sur la face externe de la paroi latérale 4 du bac 2. Comme on le voit bien sur les figures 3 et 4, les glissières 13 sont étagées sur trois niveaux et les nervures 12 sont agencées pratiquement au niveau du bord supérieur du bac 2. Dans cet exemple de réalisation, le support 5 présente une forme hémicylindrique complémentaire à celle du bac et les nervures 12 ainsi que chaque glissière 13 sont formées respectivement en une seule pièce continue s'étendant sur les surfaces courbes respectivement sur le tronçon frontal 10 de la paroi latérale 4 du bac et de la paroi interne 14 de la jupe 15. Les glissières 13 sont ouvertes en leurs extrémités 16.

Avantageusement, la paroi latérale 4 du bac et la paroi externe 17 de la jupe 15 comporte des moyens d'indexation du positionnement en hauteur du support 5 par rapport au bac 2. Ces moyens d'indexation comprennent un ergot 18 saillant de la région médiane du tronçon frontal 10 et une série de lumières étagées 19 pratiquées également dans la région médiane de la jupe 15. Dans le cas présent, les lumières 19 sont au nombre de trois.

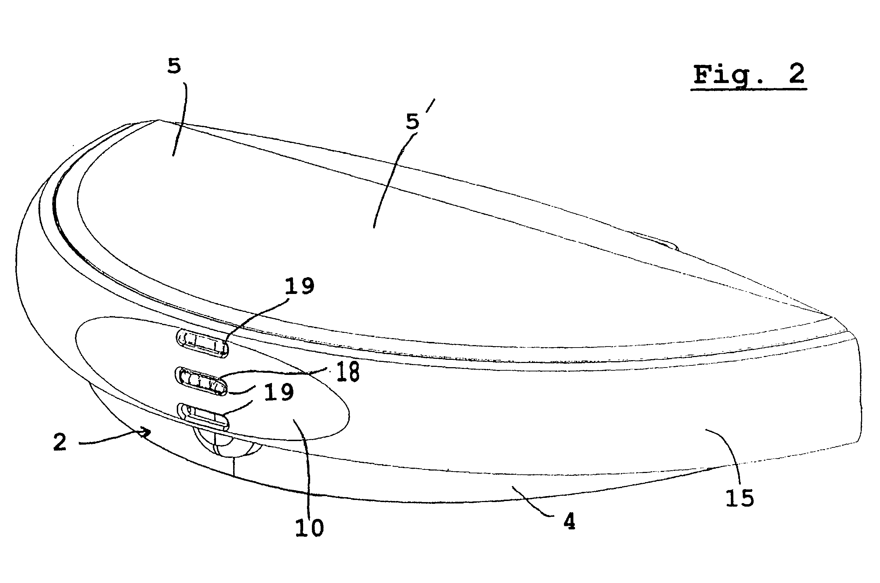

Ainsi, grâce à l'invention, on comprendra que si l'utilisateur désire obtenir une tasse moyenne de café, il saisit le bac 2 et le support 5 et les amène dans une première phase d'emboîtement illustrée à la figure 3. Cette première phase consiste à choisir une hauteur adéquate du support 5 par rapport au bac 3, opération facilitée par la mise en coïncidence de l'ergot 18 avec l'une choisie des lumières 19. Puis, il effectue, par un mouvement de translation, un coulissement du support 5 par rapport au bac 2 de manière à amener la glissière choisie à venir en prise avec la nervure 12 jusqu'à arriver à la position des figures 1, 2 ou 4 correspondant dans ce cas à un deuxième niveau en lequel la face supérieure 5' du couvercle-support 5 est apte à supporter une tasse moyenne. La position finale d'emboîtement des figures 1, 2 ou 4 est une position stable garantie par les surfaces portantes respectives de la nervure 12 et de la glissière 13.

Ainsi, l'opération de réglage en hauteur s'effectue de façon particulièrement simple et propre. De plus, le nettoyage du bac est grandement facilité du fait de l'absence de toute pièce dans son volume interne. En outre, le moyen de réglage s'avère également d'une fabrication simple et donc économique pouvant être réalisée par moulage en une seule pièce tant pour la jupe équipée de glissières que pour le bac avec sa nervure.

## Revendications

1. Machine à infusion comportant un socle (1) recevant un bac collecteur (2) formé d'un fond (3) et d'une paroi latérale (4) et équipé d'un couvercle (5) formant un support pour un récipient d'infusion, ainsi qu'un montant (6) solidaire du socle et contenant un dispositif de confection d'infusion ayant une tête (7) de sortie d'infusion surplombant à distance (d) ledit support (5) qui est monté mobile en hauteur par rapport audit bac par un moyen de réglage (11) pour faire varier la distance (d), ledit moyen de réglage (11) comprenant des organes (12, 13) d'emboîtement mutuel ajustables en hauteur par coulissement et répartis sur au moins deux régions opposées de la paroi latérale (4) du bac (2) et de la périphérie du support, **caractérisée en ce que** les organes (12, 13) d'emboîtement mutuel comprennent, d'une part, un jeu de glissières (13) opposées, étagées sur plusieurs niveaux dans des plans parallèles et implantées sur la paroi interne (14) d'une jupe (15) portée par la périphérie du support (5), et d'autre part, au moins deux nervures (12) implantées sur la face externe de la paroi latérale (4) du bac (2) et destinées à venir en prise respectivement avec deux glissières opposées.

2. Machine à infusion selon la revendication 1, **caractérisée en ce que** les glissières (13) sont étagées sur 3 niveaux et les nervures (12) sont agencées pratiquement au niveau du bord supérieur du bac (2).

3. Machine à infusion selon la revendications 1 ou 2, **caractérisée en ce que** le bac (2) et le support (5) présentent chacun une forme hémicylindrique et les nervures (12) ainsi que chaque glissière (13) sont formées respectivement en une seule pièce continue s'étendant sur les surfaces courbes respectivement de la paroi latérale (4) du bac (2) et de la paroi interne (14) de la jupe (15) .

4. Machine à infusion selon l'une des revendications 1 à 3, **caractérisée en ce que** la paroi latérale (4) du bac (2) et la paroi externe (17) de la jupe (15) du support (5) comporte des moyens d'indexation du positionnement en hauteur du support (5) par rapport au bac (2).

5. Machine à infusion selon la revendication 4, **caractérisée en ce que** les moyens d'indexation comprennent un ergot (18) saillant de la région médiane d'un tronçon frontal (10) et une série de lumières étagées (19) pratiquées dans la région médiane de la jupe (15).

## Patentansprüche

1. Brühgetränkmaschine mit einem Sockel (1), der eine Auffangwanne (2) aufnimmt, die von einem Boden (3) und einer Seitenwand (4) gebildet und mit einem Deckel (5) ausgerüstet ist, der einen Träger für ein Brühgetränkgefäß bildet, sowie mit einem Ständer (6), der mit dem Sockel fest verbunden ist und eine Vorrichtung zur Herstellung des Brühgetränks mit einem Kopf (7) für den Auslauf des Brühgetränks enthält, wobei der Kopf in einem Abstand (d) über dem Träger (5) angeordnet ist und der Träger (5) bezüglich der Wanne durch eine Einstellvorrichtung (11) der Höhe nach beweglich angeordnet ist, um den Abstand (d) verändern zu können, wobei die Einstellvorrichtung (11) ineinander eingreifende Elemente (12, 13) aufweist, die durch Verschiebung höhenverstellbar sind und über mindestens zwei gegenüberliegende Bereiche der Seitenwand (4) der Wanne (2) und des Umfangs des Trägers verteilt sind, **dadurch gekennzeichnet, daß** die ineinander greifenden Elemente (12, 13) einerseits einen Satz von gegenüberliegenden Gleitschienen (13), die über mehrere Niveaus in parallelen Ebenen stufenweise übereinander angeordnet und an der Innenwand (14) einer vom Umfang des Trägers (5) getragenen Schürze (15) eingesetzt sind, und andererseits mindestens zwei Rippen (12) aufweist, die an der Außenseite der Seitenwand (4) der Wanne (2) angesetzt und dazu bestimmt sind, daß sie jeweils in Eingriff mit zwei gegenüberliegenden Gleitschienen kommen.

2. Brühgetränkmaschine nach Anspruch 1, **dadurch gekennzeichnet, daß** die Gleitschienen (13) auf drei Höhen stufenweise übereinander angeordnet sind und die Rippen (12) praktisch auf der Höhe der Oberkante der Wanne (2) angeordnet sind.

3. Brühgetränkmaschine nach Anspruch 1 oder 2, dadurch gekennzeichn e t, daß die Wanne (2) und der Träger (5) jeder eine halbzylindrische Form aufweisen und die Rippen (12) sowie jede Gleitschiene (13) jeweils in einem durchgehenden einzigen Stück ausgebildet sind und sich über die gebogenen Flächen jeweils der Seitenwand (4) der Wanne (2) und der Innenwand (14) der Schürze (15) erstrecken.

4. Brühgetränkmaschine nach einem der Ansprüche 1 bis 3, **dadurch gekennzeichnet, daß** die Seitenwand (4) der Wanne (2) und die Außenwand (17) der Schürze (15) des Trägers (5) Mittel zur Anzeige der Höhenposition des Trägers (5) bezüglich der Wanne (2) aufweisen.

5. Brühgetränkmaschine nach Anspruch 4, **dadurch gekennzeichnet, daß** die Anzeigevorrichtung mindestens einen Zapfen (18) aufweist, der vom Mittelbereich eines Frontabschnitts (10) vorspringt, und eine Reihe von stufenweise übereinander angeordneten Schlitzen (19) aufweist, die im Mittelbereich der Schürze (15) ausgebildet sind.

## Claims

1. An infusion machine comprising a pedestal (1) for receiving a collecting sump (2), which comprises a base (3) and a side wall (4) and is equipped with a cover (5) that constitutes a support for an infusion receptacle, together with a riser (6) which is fixed with respect to the pedestal and contains an infusion-making means having an infusion outlet head (7) located by a distance (d) above the said support (5) the head being mounted for up and down movement, with respect to the said sump, by adjusting means (11) for varying the distance (d), the said adjusting means (11) comprising members (12, 13) which are arranged to mate with each other and are adjustable in height by sliding movement, and which are spaced apart over at least two opposed regions of the lateral wall (4) of the sump (2) and of the periphery of the support, **characterised in that** the mating members (12, 13) comprise, firstly, a set of opposed slides (13) which are stepped on a plurality of levels in parallel planes and located on the inner wall (14) of a skirt (15) which is carried by the periphery of the support (5), and secondly, at least two ribs (12) which are located on the outer face of the lateral wall (4) of the sump (2) and which are adapted to engage respectively with two opposed slides.

2. An infusion machine according to Claim 1, **characterised in that** the slides (13) are stepped on three levels, and the ribs (12) are disposed substantially at the level of the top edge of the sump (2).

3. An infusion machine according to Claim 1 or Claim 2, **characterised in that** the sump (2) and the support (5) each have a semi-cylindrical form, and the ribs (12), together with each slide (13), are formed respectively in a single continuous piece extending over the respective curved surfaces of the lateral wall (4) of the sump (2) and the inner wall (14) of the skirt (15).

4. An infusion machine according to one of Claims 1 to 3, **characterised in that** the lateral wall (4) of the sump (2) and the outer wall (17) of the skirt (15) of the support (5) include indexing means for the up and down positioning of the support (5) with respect to the sump (2).

5. An infusion machine according to Claim 4, **characterised in that** the indexing means include a lug (18) projecting from the middle region of a front portion (10) and a set of stepped slots (19) formed in the middle region of the skirt (15).
